# EUROPÄISCHE PATENTSCHRIFT

(11) **EP 3 321 484 B1**
(45) Veröffentlichungstag und Bekanntmachung des Hinweises auf die Patenterteilung: **07.04.2021**
(21) Anmeldenummer: 17200492.1
(22) Anmeldetag: 08.11.2017
(51) Int. Cl.: F01N 3/20

(54) **REAKTIONSMITTELABGABEANORDNUNG**
REACTION AGENT DISPENSING ASSEMBLY
DISPOSITIF DE DISTRIBUTION D'AGENT RÉACTIF

(30) Priorität: 14.11.2016 DE 102016121741; 09.01.2017 DE 102017100246
(43) Veröffentlichungstag der Anmeldung: 16.05.2018
(73) Patentinhaber: Eberspächer Exhaust Technology GmbH & Co. KG, 66539 Neunkirchen (DE)
(72) Erfinder: Vempati, Krishna Kumar, 73730 Esslingen (DE); Kurpejovic, Enver, 73230 Kirchheim unter Teck (DE)
(74) Vertreter: Ruttensperger Lachnit Trossin Gomoll

(56) Entgegenhaltungen:
- EP-A1- 2 133 527
- EP-A2- 1 481 719
- DE-A1-102004 020 138
- DE-A1-102008 043 408

## Beschreibung

Die vorliegende Erfindung betrifft eine Reaktionsmittelabgabeanordnung gemäß dem Oberbegriff des Anspruchs 1, mit welcher Reaktionsmittel, beispielsweise eine Harnstoff/Wasser-Lösung, in den Abgasstrom einer Brennkraftmaschine abgegeben werden kann.

Zur Verringerung des Stickoxidanteils in dem von einer Diesel-Brennkraftmaschine ausgestoßenen Abgas ist es bekannt, ein eine selektive katalytische Reduktion unterstützendes Reaktionsmittel in den Abgasstrom einzuleiten. Dabei ist es für eine effektive Durchführung der katalytischen Reaktion erforderlich, eine gute Durchmischung des Reaktionsmittels mit dem in einer Abgasanlage strömenden Abgas herbeizuführen. Im Allgemeinen wird dazu stromabwärts des Orts der Einleitung des Reaktionsmittels ein Mischer angeordnet, der mit einer Mehrzahl von Strömungsablenkflächen eine Verwirbelung im Abgasstrom und somit eine verbesserte Vermischung des Abgases mit dem im Allgemeinen in Sprayform in das Abgas eingespritzten Reaktionsmittel herbeiführen soll.

Eine Reaktionsmittelabgabeanordnung gemäß dem Oberbegriff des Anspruchs 1 ist aus der DE 10 2004 020 138 A1 bekannt.

Es ist die Aufgabe der vorliegenden Erfindung, eine Reaktionsmittelabgabeanordnung zur Abgabe eines Reaktionsmittels in den Abgasstrom einer Brennkraftmaschine bereitzustellen, welche eine von äußeren Bedingungen weitestgehend unabhängige Durchmischung des in das Abgas eingeleiteten Reaktionsmittels mit dem Abgas bewirken kann.

Erfindungsgemäß wird diese Aufgabe gelöst durch eine Reaktionsmittelabgabeanordnung zur Abgabe von Reaktionsmittel in den Abgasstrom einer Brennkraftmaschine gemäß Anspruch 1. Diese umfasst:
- ein einen von Abgas in einer Abgashauptströmungsrichtung durchströmbaren Abgasströmungskanal bereitstellendes Abgasführungselement,
- einen an dem Abgasführungselement in den Abgasströmungskanal sich längs einer Körperlängsachse erstreckend getragenen Reaktionsmittelabgabekörper mit einer Körperwandung, wobei in dem Reaktionsmittelabgabekörper ein von einer Wandungsinnenfläche der Körperwandung umgebenes Reaktionsmittelaufnahmevolumen vorgesehen ist und wobei der Reaktionsmittelabgabekörper an einer Wandungsaußenfläche der Körperwandung von in dem Abgasströmungskanal strömendem Abgas umströmbar ist, wobei das Reaktionsmittelaufnahmevolumen über wenigstens eine Durchtrittöffnung zu dem Abgasströmungskanal offen ist,
- eine Reaktionsmittelabgabeeinheit zur Abgabe von Reaktionsmittel in das Reaktionsmittelaufnahmevol umen,
wobei der Körperwandung eine Heizeinrichtung zur Erwärmung des Reaktionsmittelabgabekörpers wenigstens im Bereich der Wandungsinnenfläche der Körperwandung zugeordnet ist.

Um eine effiziente Benetzung der Wandungsinnenfläche mit dem in das Reaktionsmittelaufnahmevolumen eingespritzten Reaktionsmittel bereitstellen zu können, ist das Reaktionsmittelaufnahmevolumen sich in einer Verjüngungsrichtung in Richtung der Körperlängsachse wenigstens bereichsweise verjüngend ausgebildet. Dem im Allgemeinen mit der Form eines Sprühkegels sich ausbreitenden Reaktionsmittel steht somit ein sich verjüngendes Reaktionsmittelaufnahmevolumen bzw. eine entsprechend sich verjüngend Wandungsinnenfläche gegenüber.

Zur Integration der Heizeinrichtung in den Reaktionsmittelabgabekörper umfasst die Körperwandung eine die Wandungsinnenfläche wenigstens teilweise bereitstellende Innenwandung und eine die Wandungsaußenfläche wenigstens teilweise bereitstellende Außenwandung. Die Heizeinrichtung ist zwischen der Innenwandung und der Außenwandung angeordnet.

Da für eine effiziente Verdampfung des Reaktionsmittels eine Erwärmung des Reaktionsmittelabgabekörpers bzw. der Wandungsinnenfläche desselben besonders dort, wo das Reaktionsmittel auf diese Fläche auftritt, ist die Heizeinrichtung wenigstens in einem Längenbereich der Körperwandung mit sich verjüngendem Reaktionsmittelaufnahmevolumen angeordnet.

Bei der erfindungsgemäß aufgebauten Reaktionsmittelabgabeanordnung wird durch das Erwärmen der das Reaktionsmittelaufnahmevolumen umgrenzenden Körperwandung dafür gesorgt, dass in dieses Volumen eingespritztes und auf die Wandlungsinnenfläche auftreffendes Reaktionsmittel erwärmt und dadurch verdampft wird und somit effizient mit dem den Reaktionsmittelabgabekörper umströmenden Abgas vermischt werden kann. Somit wird auch das Entstehen von Reaktionsmittelablagerungen im Bereich der Reaktionsmitteleinspritzung unterdrückt.

Dabei kann das Reaktionsmittelaufnahmevolumen sich in verschiedener Weise verjüngend ausgebildet sein. Beispielsweise kann das Reaktionsmittelaufnahmevolumen sich wenigstens bereichsweise im Wesentlichen konisch verjüngend ausgebildet sein. Alternativ oder zusätzlich kann das Reaktionsmittelaufnahmevolumen sich wenigstens bereichsweise hyperbelartig oder geschwungen verjüngen.

Diese sich verjüngende Struktur des Reaktionsmittelaufnahmevolumens kann beispielsweise dadurch bereitgestellt werden, dass die Körperwandung sich in der Verjüngungsrichtung wenigstens bereichsweise vorzugsweise im Wesentlichen konisch verjüngend ausgebildet ist.

Es ist in diesem Zusammenhang darauf hinzuweisen, dass dann, wenn im Sinne der vorliegenden Erfindung davon gesprochen wird, dass die Körperwandung oder eine Wandungsfläche sich verjüngend ausgebildet ist, allgemein das Bereitstellen einer trichterartigen bzw. konusartigen, kegelstumpfartigen Struktur durch eine derartige Wandung bzw. Fläche angesprochen ist, unabhängig davon, ob beispielsweise die Dicke der Wandung selbst variiert.

Bei einer besonders vorteilhaften Ausgestaltung der erfindungsgemäßen Reaktionsmittelabgabeanordnung kann vorgesehen sein, dass die Körperwandung in einem beispielsweise an das Abgasführungselement angrenzenden ersten Längenbereich sich in der Verjüngungsrichtung vorzugsweise im Wesentlichen konisch verjüngend ausgebildet ist und in einem an den ersten Längenbereich anschließenden, vorzugsweise im Wesentlichen rohrartigen zweiten Längenbereich wenigstens eine Durchtrittsöffnung aufweist oder/und in Richtung der Körperlängsachse offen ist. Mit einem derartigen Aufbau kann gewährleistet werden, dass im ersten Längenbereich eine effiziente Benetzung der Wandungsinnenfläche und ein Abdampfen des Reaktionsmittels von der Wandungsinnenfläche auftritt, während im zweiten Längenbereich eine Durchmischung des Reaktionsmittels mit dem den Reaktionsmittelabgabekörper umströmenden Abgas bereitgestellt werden kann.

Um die in den im Abgasströmungskanal strömenden Abgasen transportierte Wärme effizient zur Erwärmung der Reaktionsmittelabgabeanordnung nutzen zu können, wird vorgeschlagen, dass die Körperwandung mit ihrem ersten Längenbereich und mit ihrem zweiten Längenbereich im Abgasströmungskanal angeordnet ist, vorzugsweise derart, dass der erste Längenbereich im Bereich seiner größten Radialabmessung bezüglich der Körperlängsachse an das Abgasführungselement angrenzend positioniert ist.

Bei einer alternativen Ausgestaltung kann die Körperwandung mit ihrem ersten Längenbereich wenigstens teilweise, vorzugsweise im Wesentlichen vollständig außerhalb des Abgasströmungskanals angeordnet sein und mit ihrem zweiten Längenbereich wenigstens teilweise im Abgasströmungskanal angeordnet sein, vorzugsweise derart, dass der erste Längenbereich im Bereich seiner kleinsten Radialabmessung bezüglich der Körperlängsachse oder/und im Bereich eines Übergangsbereichs vom ersten Längenbereich zum zweiten Längenbereich an das Abgasführungselement angrenzend positioniert ist. Auf diese Art und Weise wird sichergestellt, dass der Abgasstrom durch die Reaktionsmittelabgabeanordnung möglichst wenig beeinträchtigt wird.

Für eine alternative, sehr kompakte Bauweise wird vorgeschlagen, dass die Körperwandung in einem an das Abgasführungselement angrenzenden Längenbereich sich in der Verjüngungsrichtung vorzugsweise im Wesentlichen konisch verjüngend ausgebildet ist und in diesem Längenbereich wenigstens eine Durchtrittsöffnung aufweist oder/und an einem von dem Abgasführungselement entfernten Ende dieses Längenbereichs vorzugsweise in Richtung der Körperlängsachse offen ist.

Eine effiziente Benetzung der Wandungsinnenfläche kann gewährleistet werden, wenn die Reaktionsmittelabgabeeinheit zur Abgabe von Reaktionsmittel in das Reaktionsmittelaufnahmevolumen in einer zur Körperlängsachse im Wesentlichen parallelen, im Wesentlichen der Verjüngungsrichtung entsprechenden Reaktionsmittel-Hauptabgaberichtung angeordnet ist.

Um zu verhindern, dass Reaktionsmittel in Tröpfchenform aus dem Reaktionsmittelaufnahmevolumen austritt, wird vorgeschlagen, dass das Reaktionsmittelaufnahmevolumen im Bereich einer Öffnung für den Austritt von Reaktionsmittel offen ist, und dass im Reaktionsmittelaufnahmevolumen, vorzugsweise im Bereich der Öffnung, ein Reaktionsmittelfilter vorgesehen ist. Die wesentliche Aufgabe des Reaktionsmittelfilters besteht also darin, Tröpfchen zurückzuhalten und im Wesentlichen nur in gas- bzw. dampfartiger Form vorliegendes Reaktionsmittel aus dem Reaktionsmittelaufnahmevolumen austreten zu lassen. Dies kann in besonders einfacher Weise dadurch erfolgen, dass der Reaktionsmittelfilter poröses Material, vorzugsweise Metallschaummaterial, umfasst.

Die Verdampfung von in Tröpfchenform eingeleitetem Reaktionsmittel kann weiter dadurch unterstützt werden, dass im Reaktionsmittelaufnahmevolumen ein Reaktionsmittelablenkelement vorgesehen ist.

Zum Bereitstellen einer das Reaktionsmittel in Richtung auf die Körperwandung zu ablenkenden Oberfläche kann das Reaktionsmittelablenkelement sich in Richtung von der Reaktionsmittelabgabeeinheit weg vorzugsweise kegelartig erweiternd ausgebildet sein.

Die Körperlängsachse steht vorzugsweise im Wesentlichen orthogonal zur Abgashauptströmungsrichtung.

Um Wärmeverluste insbesondere dann, wenn eine Brennkraftmaschine bzw. eine Abgasanlage bei vergleichsweise niedrigen Temperaturen mit hoher Last betrieben wird, so weit als möglich zu vermeiden, wird vorgeschlagen, dass die Körperwandung eine zwischen der Innenwandung und der Außenwandlung angeordnete Zwischenwandung umfasst, und dass zwischen der Zwischenwandung und der Außenwandung Isoliermaterial angeordnet ist.

Die Heizeinrichtung kann die Innenwandung vorzugsweise wendelartig umgebend angeordnet sein. Beispielsweise kann die Heizeinrichtung einen die Innenwandung spiral- bzw. wendelartig umgebenden Heizleiter umfassen.

Die Erfindung betrifft ferner eine Abgasanlage für eine Brennkraftmaschine, vorzugsweise in einem Fahrzeug, umfassend eine erfindungsgemäß aufgebaute Reaktionsmittelabgabeanordnung.

Nachfolgend wird die vorliegende Erfindung mit Bezug auf die beiliegenden Figuren detailliert beschrieben. Es zeigt.
- Fig. 1: eine Längsschnittansicht einer Reaktionsmittelabgabeanordnung;
- Fig. 2: einen Schnitt durch einen Reaktionsmittelabgabekörper der Reaktionsmittelabgabeanordnung der Fig. 1, geschnitten längs einer Linie II-II in Fig. 1;
- Fig. 3: einen Schnitt durch einen Reaktionsmittelabgabekörper der Reaktionsmittelabgabeanordnung der Fig. 1, geschnitten längs einer Linie III-III in Fig. 1;
- Fig.4: eine der Fig. 1 entsprechende Längsschnittansicht einer alternativ aufgebauten Reaktionsmittelabgabeanordnung;
- Fig. 5: einen Schnitt durch einen Reaktionsmittelabgabekörper der Reaktionsmittelabgabeanordnung der Fig. 4, geschnitten längs einer Linie V-V in Fig. 4;
- Fig. 6: eine Abwandlung der in Fig. 1 dargestellten Reaktionsmittelabgabeanordnung;
- Fig. 7: eine weitere Abwandlung der in Fig. 1 dargestellten Reaktionsmittelabgabeanordnung;
- Fig. 8: eine Seitenansicht eines bei der Reaktionsmittelabgabeanordnung der Fig. 7 eingesetzten Reaktionsmittelablenkelements;
- Fig. 9: eine Abwandlung der in Fig. 4 dargestellten Reaktionsmittelabgabeanordnung;
- Fig. 10: eine weitere Abwandlung der in Fig. 4 dargestellten Reaktionsmittelabgabeanordnung;
- Fig. 11: eine Reaktionsmittelabgabeanordnung mit einer alternativen Ausgestaltung eines sich verjüngenden Reaktionsmittelaufnahmevolumens;
- Fig. 12: eine weitere alternative Ausgestaltung eines sich verjüngenden Reaktionsmittelaufnahmevolumens;
- Fig. 13: eine weitere alternative Ausgestaltung eines sich verjüngenden Reaktionsmittelaufnahmevolumens;
- Fig. 14: eine weitere Abwandlung der in Fig. 1 dargestellten Reaktionsmittelabgabeanordnung.

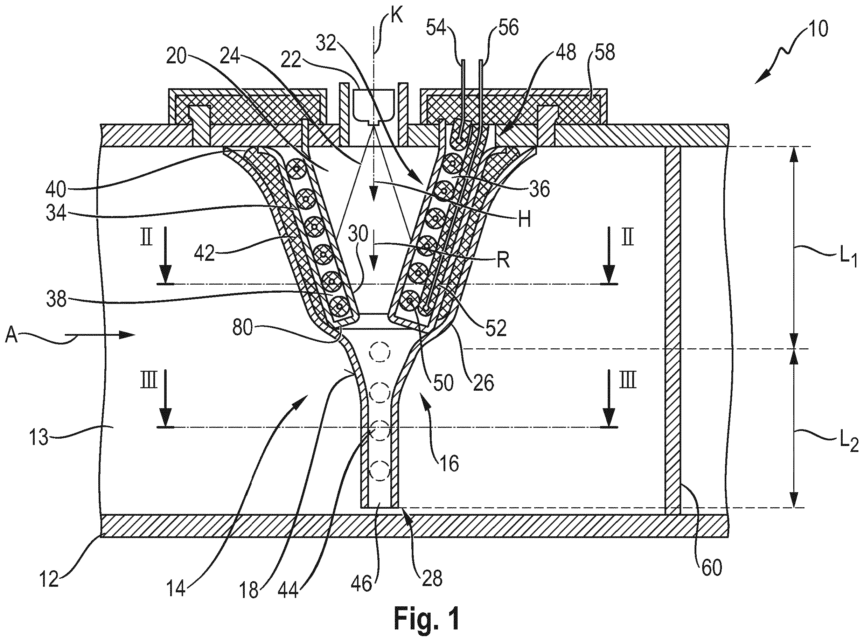

Die Fig. 1 bis 3 zeigen eine erste Ausgestaltungsform einer allgemein mit 10 bezeichneten Reaktionsmittelabgabeanordnung, durch welche ein Reaktionsmittel, beispielsweise eine Harnstoff/Wasser-Lösung, in das in eine Abgasanlage einer Brennkraftmaschine strömende Abgas eingeleitet werden kann.

Die Reaktionsmittelabgabeanordnung 10 umfasst ein beispielsweise rohrartig ausgebildetes Abgasführungselement 12, das in eine Abgasanlage integriert sein kann bzw. mit Rohrabschnitten der Abgasanlage verbunden sein kann. In dem Abgasführungselement 12 strömt Abgas in einem Abgasströmungskanal 13 in einer Abgashauptströmungsrichtung A, welche im Wesentlichen auch einer Längserstreckungsrichtung des Abgasführungselements entspricht. Es ist darauf hinzuweisen, dass lokal in dem Abgasführungselement 12 von dieser Abgashauptströmungsrichtung A abweichende Strömungsrichtungen des darin geführten Abgases auftreten können.

An dem Abgasführungselement 12 ist ein allgemein mit 14 bezeichneter Reaktionsmittelabgabekörper getragen. Der Reaktionsmittelabgabekörper 14 weist eine allgemein in Richtung einer Körperlängsachse K sich in einer Verjüngungsrichtung R, welche im Wesentlichen parallel zur Körperlängsachse K orientiert ist, verjüngende, beispielsweise trichterartige oder konusartig bzw. kegelstumpfartig sich verjüngende, Struktur auf.

Der Reaktionsmittelabgabekörper 14 weist eine allgemein mit 16 bezeichnete und in Richtung der Körperlängsachse K langgestreckte bzw. diese umgebende Körperwandung auf. Im Bereich ihrer größten radialen Abmessung bezüglich der Körperlängsachse K ist die Körperwandung 16 an das Abgasführungselement 12 angebunden.

Der Reaktionsmittelabgabekörper 14 ist im Inneren des Abgasführungselements 12 so orientiert angeordnet, dass seine Körperlängsachse K im Wesentlichen orthogonal zur Abgashauptströmungsrichtung A steht. Das im Abgasführungselement 12 in die Abgashauptströmungsrichtung A auf den Reaktionsmittelabgabekörper 14 zu strömende Abgas umströmt den Reaktionsmittelabgabekörper 16 an einer Wandungsaußenfläche 18 der Körperwandung 16.

Im Inneren des Reaktionsmittelabgabekörpers 14 ist ein allgemein mit 20 bezeichnetes und aufgrund der trichterartigen Struktur der Körperwandung 16 sich in Richtung der Körperlängsachse K verjüngendes Reaktionsmittelaufnahmevolumen bereitgestellt. Durch eine an dem Abgasführungselement 12 beispielsweise zur Körperlängsachse K im Wesentlichen zentrisch angeordnete Reaktionsmittelabgabeeinheit 22, beispielsweise einen Injektor, wird Reaktionsmittel in einer Reaktionsmittel-Hauptabgaberichtung H in das Reaktionsmittelaufnahmevolumen 20 eingespritzt. Die Reaktionsmittel-Hauptabgaberichtung H entspricht im Wesentlichen der Verjüngungsrichtung R und ist vorzugsweise im Wesentlichen parallel zur Körperlängsachse K ausgerichtet. Das durch die Reaktionsmittelabgabeeinheit 22 abgegebene bzw. in das Reaktionsmittelaufnahmevolumen 20 eingespritzte Reaktionsmittel wird im Allgemeinen in Form eines Sprühkegels 24 abgegeben, welcher bezüglich der Reaktionsmittel-Hauptabgaberichtung H ein in Richtung von der Reaktionsmittelabgabeeinheit 22 weg sich erweiterndes Volumen einnimmt.

Der Reaktionsmittelabgabekörper 14 weist zwei Längenbereiche L₁, L₂ auf. Im ersten Längenbereich L₁ ist der Reaktionsmittelabgabekörper 14 mit der vorangehend beschriebenen, sich verjüngenden bzw. trichterartigen Struktur bereitgestellt. Im zweiten Längenbereich L₂ ist, nach einem Übergangsbereich 80, der Reaktionsmittelabgabekörper 14 im Wesentlichen rohrartig mit näherungsweise konstanter Querschnittsgeometrie bereitgestellt. Eine die Wandungsaußenfläche 18 bereitstellende Außenwandung 26 des Reaktionsmittelabgabekörpers erstreckt sich vom Bereich der Anbringung an dem Abgasführungselement 12 bis zu einem freien Endbereich 28, in welchem die Außenwandung 26 mit Abstand zum Abgasführungselement 12 endet. Der Reaktionsmittelabgabekörper 14 ist somit im Bereich seiner größten radialen Abmessung bezüglich der Körperlängsachse K am Abgasführungselement 12 getragen.

Eine im Wesentlichen nur im ersten Längenbereich L₁ sich erstreckende Innenwandung 30 und die Außenwandung 26 stellen im Wesentlichen eine Wandungsinnenfläche 32 des Reaktionsmittelabgabekörpers bereit, wobei der durch die Innenwandung 30 bereitgestellte Bereich der Wandungsinnenfläche 32 im Wesentlichen auch das Reaktionsmittelaufnahmevolumen 20 umgrenzt.

Im ersten Längenbereich L₁ liegt zwischen der Innenwandung 30 und der Außenwandung 18 eine mit der Innenwandung 30 beispielsweise integral bereitgestellte Zwischenwandung 34. In einem zwischen der Innenwandung 30 und der Zwischenwandung 34 eingeschossenen Volumenbereich 36 ist eine nachfolgend noch detailliert erläuterte Heizeinrichtung 38 angeordnet. In einem zwischen der Zwischenwandung 34 und der Außenwandung 26 eingeschlossenen Volumenbereich 40 ist Isoliermaterial 42 angeordnet, also ein Material, das eine geringere Wärmeleitfähigkeit aufweist, als das Aufbaumaterial der Zwischenwandung 34 bzw. das Aufbaumaterial der Außenwandung 26. Beispielsweise können die Innenwandung 30, die damit integral ausgebildete Zwischenwandung 34 und die Außenwandung 26 aus Metallmaterial, insbesondere durch Umformen von Blechmaterial, bereitgestellt werden.

Im zweiten Längenbereich L₂ weist die Außenwandung 26 eine Mehrzahl von in Richtung der Körperlängsachse L aufeinanderfolgenden und beispielsweise über den Umfang verteilten Durchtrittsöffnungen 44 auf. Ferner ist im freien Endbereich 28 die Außenwandung 26 und damit das Reaktionsmittelaufnahmevolumen 20 in Richtung der Körperlängsachse K über eine Öffnung 46 offen.

Die Heizeinrichtung 38 kann beispielsweise einen die Innenwandung 30 wendel- bzw. spiralartig umgebenden Heizleiter 48 mit einem elektrisch leitenden Kern 50 und einem diesen Kern 50 umgebenden Mantel 52 umfassen. Entsprechend der trichterartigen bzw. sich verjüngenden Struktur der Innenwandung 30 nimmt der Windungsdurchmesser des Heizleiters 48 in der Verjüngungsrichtung R ab. Zum Anschluss an eine Energiequelle sind Anschlussbereiche 54, 56 aus dem Abgasführungselement 12 und aus einer das Abgasführungselement 12 insbesondere in demjenigen Bereich, in welchem der Reaktionsmittelabgabekörper 14 am Abgasführungselement 12 getragen ist, umgebenden Isolieranordnung 58 herausgeführt.

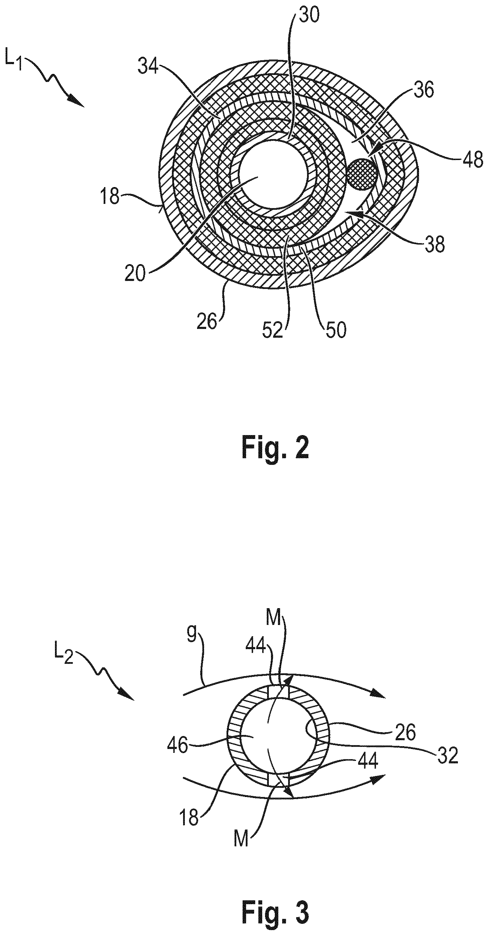

Im Betrieb einer Brennkraftmaschine und bei im Abgasführungselement 12 strömendem Abgas wird zur Herbeiführung einer selektiven katalytischen Reduktion in einem stromabwärts der Reaktionsmittelabgabeanordnung 10 in einer Abgasanlage angeordneten Katalysator durch die Reaktionsmittelabgabeeinheit 22 Reaktionsmittel in das Reaktionsmittelaufnahmevolumen 20 eingespritzt. Das im Allgemeinen in Sprayform eingespritzte Reaktionsmittel trifft auf die durch die Innenwandung 30 bereitgestellte Wandungsinnenfläche 32 auf. Durch die Erwärmung der Innenwandung 30 und damit des durch diese bereitgestellten Teils der Wandungsinnenfläche 32 wird das die Oberfläche der Innenwandung 30 benetzende Reaktionsmittel verdampft, so dass zusammen mit dem nicht auf die Innenwandung 30 auftreffenden, in Tröpfchenform in das Reaktionsmittelaufnahmevolumen 20 eingeleiteten Teil des Reaktionsmittels der von der Innenwandung 30 wieder abgedampfte Teil des Reaktionsmittels in der Reaktionsmittel-Hauptabgaberichtung H in den zweiten Längenbereich L₂ des Reaktionsmittelabgabekörpers 14 strömt. Da, wie in Fig. 3 veranschaulicht, der Reaktionsmittelabgabekörper 14 im Bereich seiner Außenfläche 18 von Abgas G umströmt wird, entsteht insbesondere auch im Außenumfangsbereich des zweiten Längenbereichs L₂ ein Unterdruck, so dass durch einen Saugpumpeneffekt der Austritt von Reaktionsmittel M aus dem rohrartigen zweiten Längenbereich L₂ durch die Durchtrittsöffnungen 44 hindurch und auch die Öffnung 46 hindurch unterstützt wird. Das in sehr feiner Tröpfchenform bzw. Dampfform somit in den Abgasstrom eingeleitete Reaktionsmittel M kann sich sehr effizient mit dem Abgas G durchmischen, da bereits bei der Umströmung des Reaktionsmittelabgabekörpers 14 die Vermischung unterstützende Verwirbelungen entstehen können. Stromabwärts des Reaktionsmittelabgabekörpers 14 ist ferner ein in Fig. 1 schematisch dargestellter Mischer 60 angeordnet, der für eine weitere Durchmischung von Reaktionsmittel M und Abgas G sorgt.

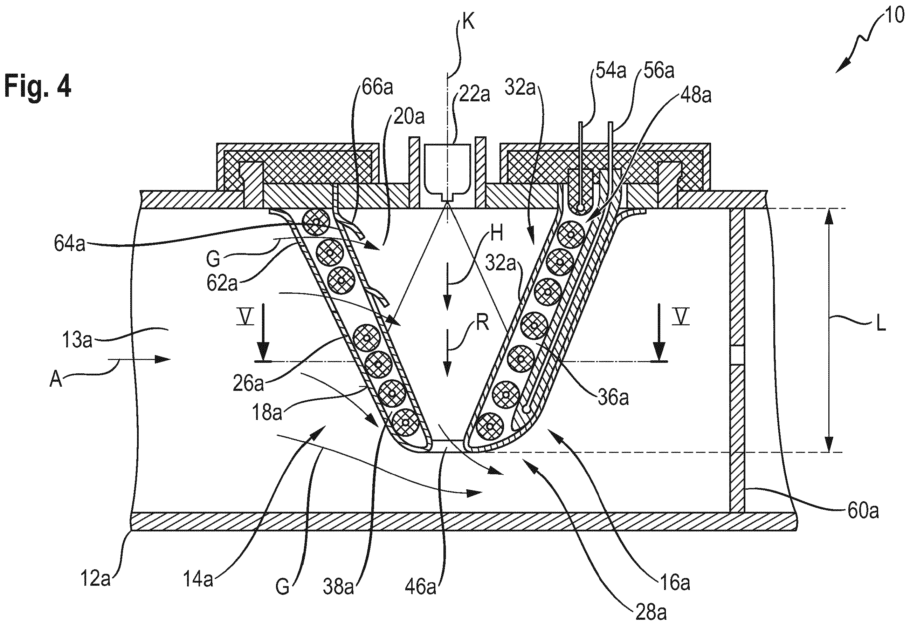

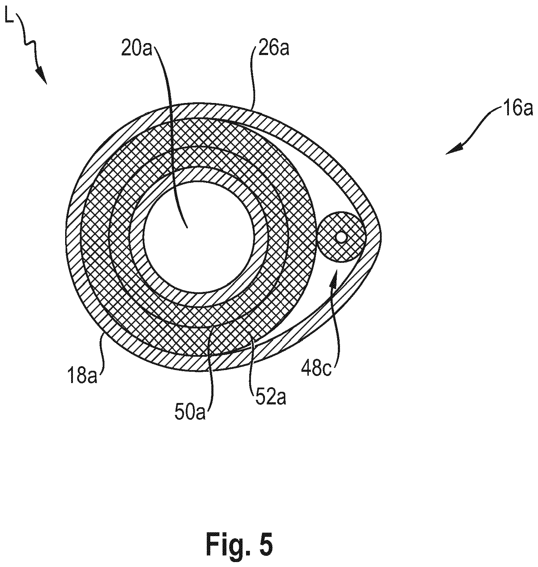

Die Fig. 4 und 5 zeigen eine alternative Ausgestaltungsform einer Reaktionsmittelabgabeanordnung. Komponenten, welche hinsichtlich Aufbau bzw. Funktion vorangehend beschriebenen Komponenten entsprechen, sind mit den gleichen Bezugszeichen unter Hinzufügung eines Anhangs "a" bezeichnet.

Der Reaktionsmittelabgabekörper 14a ist über seinen gesamten sich in Richtung der Körperlängsachse K erstreckenden Längenbereich L mit im Wesentlichen trichterartiger bzw. sich verjüngender Struktur ausgebildet. Ebenso wie bei der vorangehend beschriebenen Ausgestaltungsform, weist sowohl die Innenwandung 30a, als auch die Außenwandung 26a eine entsprechende trichterartige bzw. kegelstumpfartige Gestalt auf, um auf diese Art und Weise auch die sich in der Verjüngungsrichtung R verjüngende Struktur des Reaktionsmittelaufnahmevolumens 20a bereitzustellen.

Der Reaktionsmittel-Aufnahmekörper 14a ist in seinem freien Endbereich 28a über eine Öffnung 46a zum Inneren des Abgasführungselements 12a offen. Ferner sind insbesondere am stromaufwärtigen Bereich der Körperwandung 16a sowohl in der Außenwandung 26a, als auch der Innenwandung 30a Durchtrittsöffnungen 62a bzw. 64a vorgesehen, wobei jeweils ein Paar einander zugeordneter Durchtrittsöffnungen 62a, 64a zueinander so ausgerichtet sein können, dass das im Abgasführungselement 12a strömende Abgas G, wie durch Strömungspfeile in Fig. 4 angedeutet, durch jeweils ein Paar derartiger Durchtrittsöffnungen 62a, 64a hindurch und in das Reaktionsmittelaufnahmevolumen 20a einströmen kann. Dabei können den an der Innenwandung 30a vorgesehenen Durchtrittsöffnungen 64a Strömungsleitelemente 66a zugeordnet sein, welche das durch diese Durchtrittsöffnungen 64a hindurchtretende Abgas G in Richtung der Körperlängsachse K bzw. der Reaktionsmittel-Hauptabgaberichtung H umlenken.

Bei dieser in den Fig. 4 und 5 dargestellten kompakten Bauart des Reaktionsmittelabgabekörpers 14a können die Innenwandung 30a und die Außenwandung 26a, welche jeweils auch die Wandungsinnenfläche 32a bzw. die Wandungsaußenfläche 18a bereitstellen, integral an einem beispielsweise als Blechumformteil bereitgestellten Bauteil ausgebildet sein und zwischen sich das die Heizeinrichtung 38a aufnehmende Volumen 36a begrenzen. In diesem Volumen ist der Heizleiter 48a die Innenwandung 30a umgebend angeordnet, so dass im Wesentlichen über die gesamte Erstreckungslänge des Reaktionsmittelabgabekörpers 14a in Richtung der Körperlängsachse K die Innenwandung 30a und somit auch die gesamte Wandungsinnenfläche 32a erwärmt werden können.

Während bei der mit Bezug auf die Fig. 1 bis 3 beschriebene Ausgestaltungsform das Abgas G im Wesentlichen nicht in das Reaktionsmittelaufnahmevolumen 20 eintreten wird, durchströmt das Abgas G bei der in den Fig. 4 und 5 dargestellten Ausgestaltungsform auch dieses Reaktionsmittelaufnahmevolumen 20a und sorgt somit aktiv dafür, dass das in das Reaktionsmittelaufnahmevolumen 20a eingespritzte Reaktionsmittel M bereits im Bereich dieses Reaktionsmittelaufnahmevolumens 20a mit Abgas G vermischt wird und durch dieses aktiv aus dem Reaktionsmittelaufnahmevolumen herausgetragen wird.

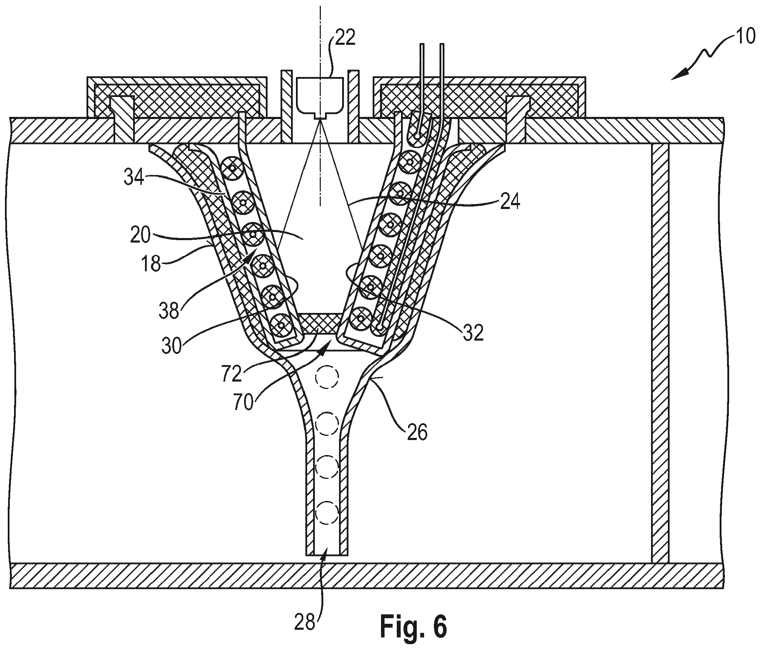

Die Fig. 6 zeigt eine Abwandlung der in Fig. 1 dargestellten Reaktionsmittelabgabeanordnung 10. Im Reaktionsmittelaufnahmevolumen 20 ist im Bereich einer Öffnung 70, über welche dieses zum Austritt von Reaktionsmittel offen ist, ein Reaktionsmittelfilter 72 angeordnet. Der vorzugsweise aus porösem Material, wie zum Beispiel Metallschaummaterial oder Schaumkeramikmaterial, aufgebaute Reaktionsmittelfilter 72 verhindert, dass Reaktionsmittel in Tröpfchenform aus dem Reaktionsmittelaufnahmevolumen 20 austritt. Das in Tröpfchenform auf den Reaktionsmittelfilter 72 auftreffende Reaktionsmittel wird aufgrund der porösen Struktur desselben in diesem aufgenommen. Da der Reaktionsmittelfilter 72 durch die in der Körperwandung 16 vorgesehene Heizeinrichtung 38 erwärmt wird, wird auch das in diesem in flüssiger Form aufgenommene Reaktionsmittel erwärmt und in dampfartiger bzw. gasartiger Form abgegeben. Das im Reaktionsmittelaufnahmevolumen 20 in gasartiger bzw. dampfartiger Form vorliegenden Reaktionsmittel kann durch die offenporige Struktur des Reaktionsmittelfilters 72 hindurchtreten.

Es ist darauf hinzuweisen, dass auch andere Strukturen für den Reaktionsmittelfilter 72 verwendet werden können. So kann beispielsweise ein Metallgeflecht oder allgemein ein metallisches oder keramisches Fasermaterial eingesetzt werden. Auch eine lamellenartige Anordnung mit einen direkten Hindurchtritt von Reaktionsmitteltröpfchen verhindernder, sich bereichsweise überlappendender Positionierung einzelner Lamellenelemente kann vorgesehen sein.

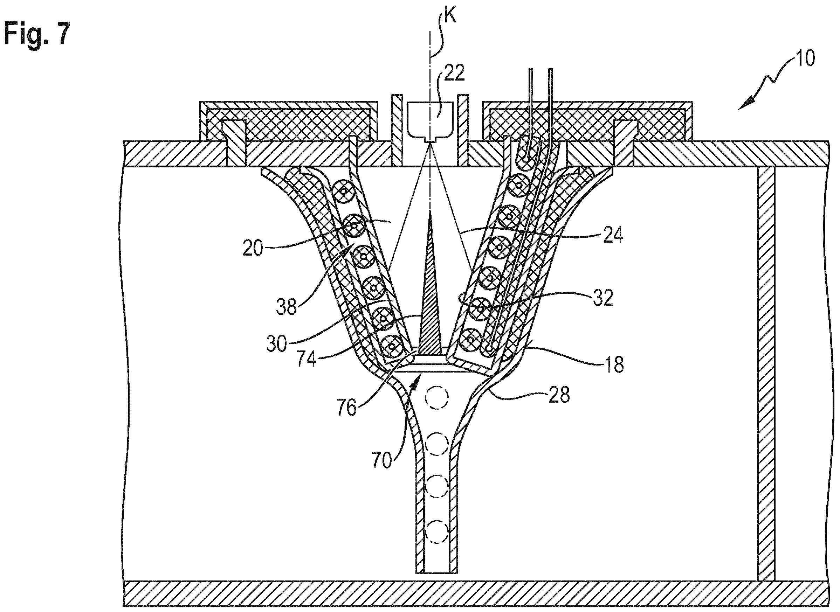

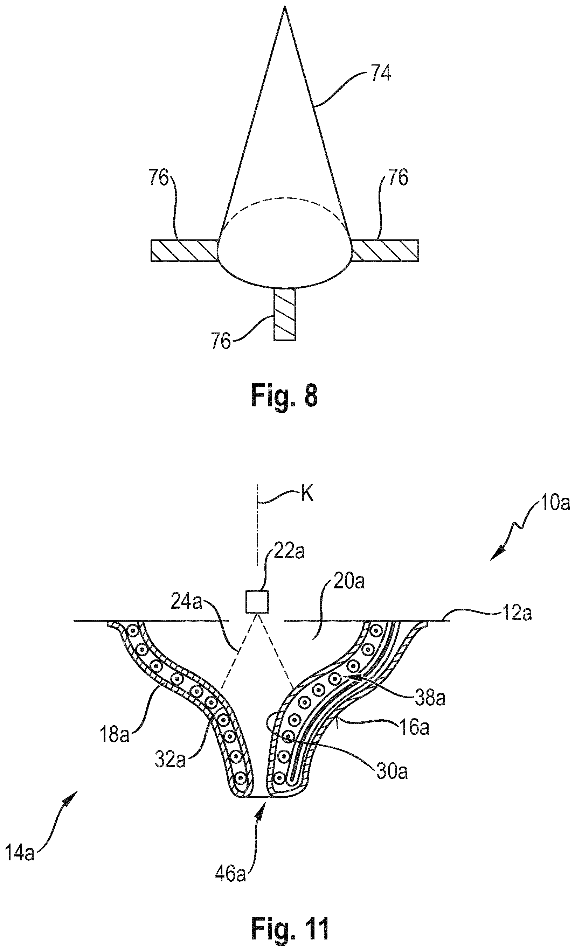

Bei der in Fig. 7 dargestellten Abwandlung der Reaktionsmittelabgabeanordnung 10 ist im Reaktionsmittelaufnahmevolumen 20 ein in Fig. 8 dargestelltes, kegelartig geformtes Reaktionsmittelablenkelement 74 angeordnet. Dieses ist über eine Mehrzahl von Trägervorsprüngen 76 an der Innenwandung 30 getragen. Das Reaktionsmittelablenkelement 74 ist vorzugsweise entlang der Körperlängsachse K ausgerichtet und erweitert sich somit in Richtung von der Reaktionsmittelabgabeeinheit 22 weg.

Das von der Reaktionsmittelabgabeeinheit 22 in Form des Sprühkegels 24 abgegebene Reaktionsmittel trifft im zentralen Bereich des Reaktionsmittelaufnahmevolumens 20 auf die Oberfläche des Reaktionsmittelablenkelements 74 auf und wird von dieser nach außen in Richtung auf die erwärmte Wandungsinnenfläche 32 zu abgelenkt. Auch somit kann der Austritt von Reaktionsmittel in Tröpfchenform aus dem Reaktionsmittelaufnahmevolumen 20 weitestgehend verhindert werden.

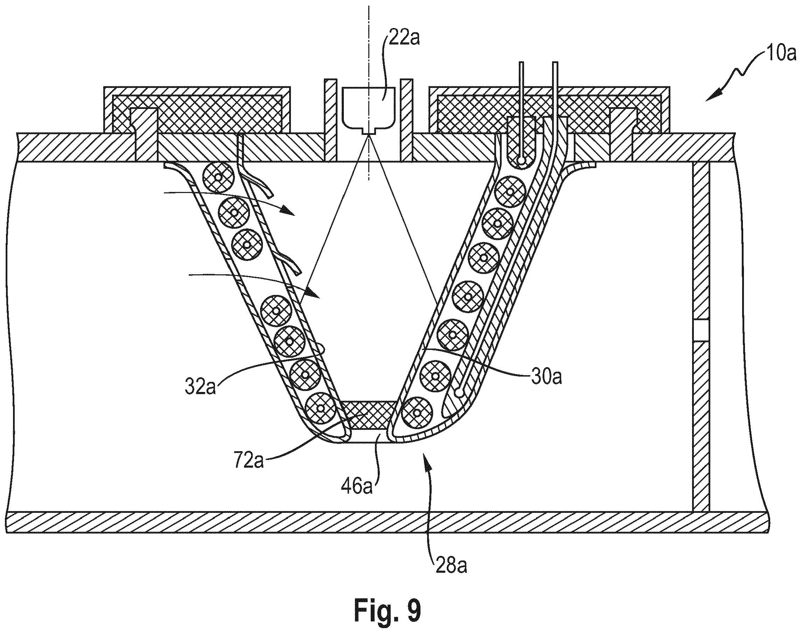

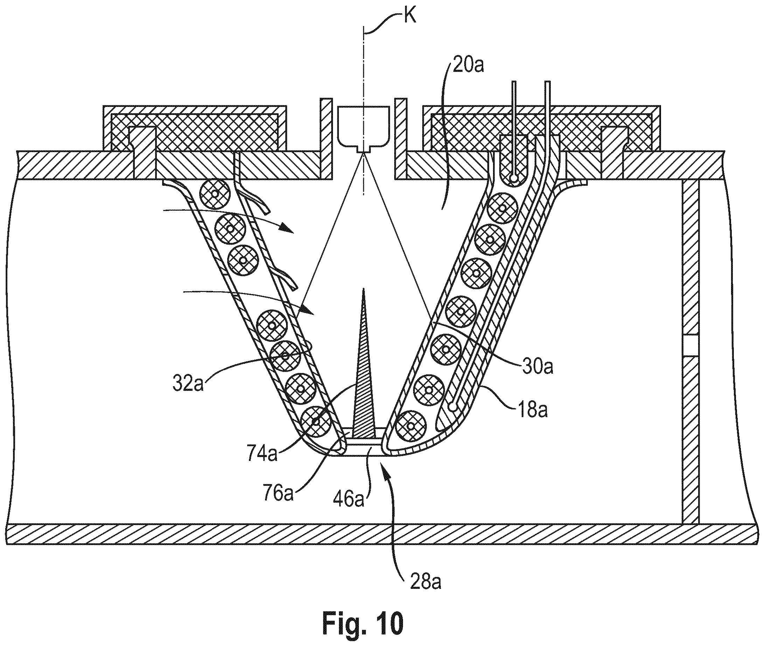

Die Fig. 9 und 10 zeigen, dass auch bei der in Fig. 4 dargestellten Ausgestaltungsform der Reaktionsmittelabgabeanordnung 10a ein Reaktionsmittelfilter 72a im Bereich der Öffnung 46a bzw. ein im Reaktionsmittelaufnahmevolumen 20a sich vorzugsweise entlang der Körperlängsachse K erstreckendes Reaktionsmittelablenkelement 74a vorgesehen sein können. Es ist in diesem Zusammenhang darauf hinzuweisen, dass sowohl bei dieser Ausgestaltungsform, als auch bei der vorangehend mit Bezug auf die Fig. 6 und 7 beschriebenen Ausgestaltungsform der Reaktionsmittelabgabeanordnung ein Reaktionsmittelfilter in Kombination mit einem Reaktionsmittelablenkelement vorgesehen sein kann.

Die Fig. 11 zeigt beispielhaft anhand der in Fig. 4 dargestellten Ausgestaltungsform der Reaktionsmittelabgabeanordnung 10a, dass das Reaktionsmittelaufnahmevolumen 20a auch mit anderer sich verjüngender Struktur bereitgestellt werden kann. In dem in Fig. 11 dargestellten Ausgestaltungsbeispiel verjüngt das Reaktionsmittelaufnahmevolumen 20 sich mit S-artig geschwungener Struktur, bei welcher zunächst, ausgehend von dem Abgasführungselement 12a, eine stärker Abnahme des Radius, bezogen auf eine Längeneinheit in Richtung der Körperlängsachse K, vorhanden ist, und dann in dem der Öffnung 46a sich annähernd Bereich eine geringere Abnahme des Radius, bezogen auf eine Längeneinheit in Richtung der Körperlängsachse K, vorhanden ist.

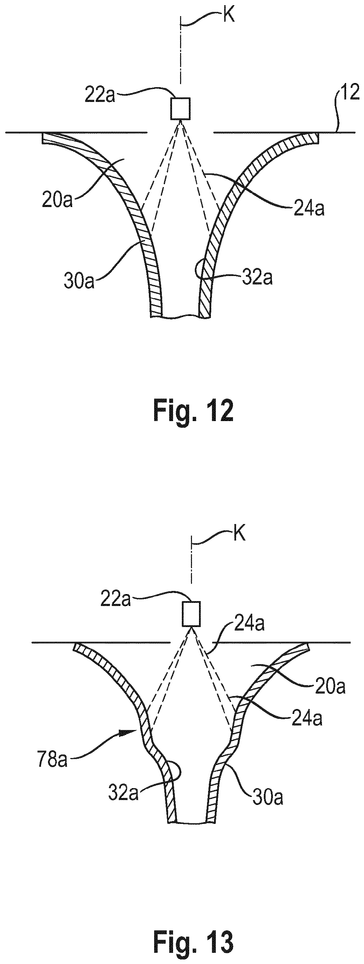

Die Fig. 12 zeigt eine Struktur, bei welcher das Reaktionsmittelaufnahmevolumen 20a mit im Wesentlichen hyperbelartiger bzw., bezogen auf die Körperlängsachse K, hyperboloidartiger Struktur sich verjüngend ausgebildet ist. Auch hier ist in dem an das Abgasführungselement 12a angrenzenden Bereich zunächst eine stärkere Abnahme des Radius vorhanden, als in einem der Öffnung, über welche das Reaktionsmittelaufnahmevolumen 20a offen ist, sich annähernden Längenbereich.

Die Fig. 13 zeigt eine Struktur, bei welcher in die grundsätzlich hyperbelartig sich verjüngende Gestalt des Reaktionsmittelaufnahmevolumens 20a ein im Wesentlichen konisch, also mit näherungsweise linearer Radiusabnahme ausgebildeter Abschnitt 78a eingesetzt ist. Dabei kann die Reaktionsmittelabgabeeinheit 22a das Reaktionsmittel in Form des Sprühkegels 24a im Wesentlichen auf diesen Abschnitt 78a zu gerichtet abgeben.

Die Fig. 13 veranschaulicht somit, dass in verschiedenen Längenbereichen das Reaktionsmittelaufnahmevolumen 20a bzw. die dieses Wesentlichen umgebende Innenwandung 30a mit Längenbereichen verschiedener Verjüngungsgeometrie ausgebildet sein kann. Auch ist darauf hinzuweisen, dass die vorangehend beschriebenen Strukturen auch bei dem in Fig. 1 dargestellten Ausgestaltungsbeispiel der Reaktionsmittelabgabeanordnung vorgesehen sein können.

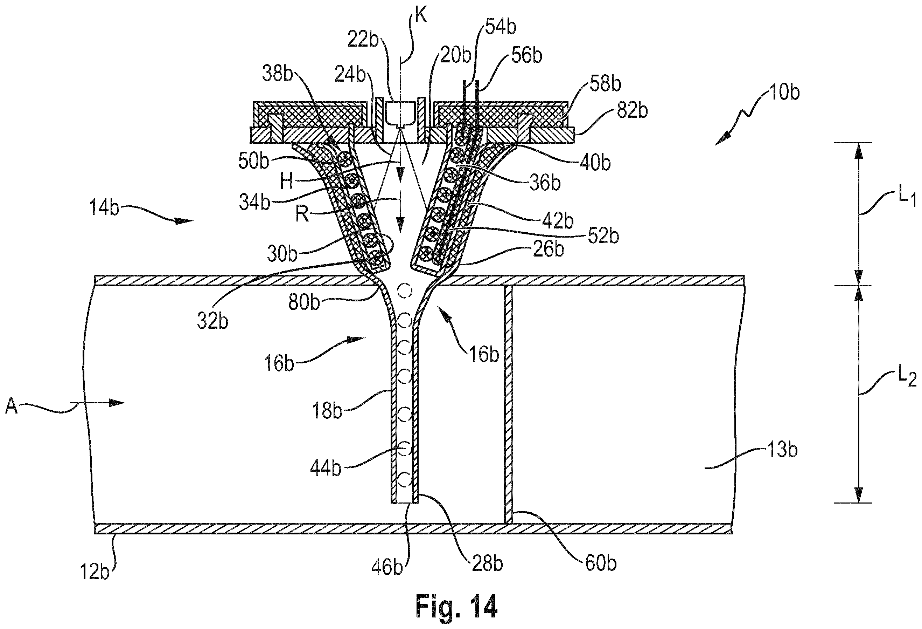

Eine weitere abgewandelte Ausgestaltungsform einer Reaktionsmittelabgabeanordnung ist in Fig. 14 dargestellt. In Fig. 14 sind Komponenten bzw. Baugruppen, welche hinsichtlich Aufbau bzw. Funktion Komponenten bzw. Baugruppen der in den Figuren 1-3 dargestellten Ausgestaltungsform entsprechen, mit den gleichen Bezugszeichen unter Hinzufügung eines Anhangs "b" bezeichnet.

Bevor im Folgenden detailliert auf den in Figur 14 dargestellten Aufbau der Reaktionsmittelabgabeanordnung 10b eingegangen wird, sei darauf hingewiesen, dass diese Reaktionsmittelabgabeanordnung 10b, welche im Wesentlichen auf dem Konstruktionsprinzip der Ausgestaltungsform der Fig. 1-3 basiert, grundsätzlich auch in verschiedener Weise abgewandelt werden kann, beispielsweise durch Bereitstellen des in Fig. 6 erkennbaren Reaktionsmittelfilters, des in Fig. 7 dargestellten Reaktionsmittelablenkelements oder/und der in den Fig. 11-13 dargestellten Verjüngungsgeometrien.

Bei dem in Fig. 14 dargestellten Aufbau ist die Reaktionsmittelabgabeanordnung 10b so positioniert, dass sie mit dem Übergangsbereich 80b zwischen dem ersten Längenbereich L₁ und dem zweiten Längenbereich L₂ an das Abgasführungselement 12b angrenzend positioniert ist bzw. an dem Abgasführungselement 12b getragen ist. Es sei hier darauf hingewiesen, dass im Sinne der vorliegenden Erfindung die Reaktionsmittelabgabeanordnung dann am Abgasführungselement getragen ist, wenn zwischen diesen beiden Baugruppen eine Abstützwechselwirkung oder/und eine Abdichtwechselwirkung besteht. Bei dem Aufbau der Fig. 14 kann dies beispielsweise dadurch erfolgen, dass die Außenwandung 26b im Übergangsbereich 80b an dem Abgasführungselement 12b z.B. durch Verschweißung materialschlüssig und somit insbesondere auch gasdicht festgelegt ist.

Die Reaktionsmittelabgabeanordnung 10b liegt mit ihrem sich verjüngenden ersten Längenbereich L₁ außerhalb des Abgasströmungskanals 13b. Nur mit ihrem zweiten Längenbereich L₂ erstreckt die Reaktionsmittelabgabeanordnung 10b bzw. der Reaktionsmittelabgabekörper 14b derselben sich im Abgasströmungskanal 13b und ist dort an der Wandungsaußenfläche 18b der Körperwandung 16b des Reaktionsmittelabgabekörpers 14b von dem im Abgasströmungskanal 13b strömenden Abgas A umströmbar. Somit erstreckt sich nur der orthogonal zur Körperlängsachse K nur eine vergleichsweise geringe radiale Abmessung aufweisende zweite Längenbereich L₂ im Abgasströmungskanal 13b, wodurch ein vergleichsweise geringer Strömungswiderstand für das im Abgasströmungskanal 13b strömende Abgas A entsteht. In diesem Bereich ist der Reaktionsmittelabgabekörper 14b über die Durchtrittsöffnungen 44b sowie die Öffnung 46b am freien Endbereich 28b zum Austritt des Reaktionsmittel R in den Abgasströmungskanal 13b und zur Durchmischung mit dem darin strömenden Abgas A insbesondere vermittels des stromabwärts positionierten Mischers 60b offen.

Während bei dieser in Fig. 14 dargestellten Ausgestaltungsform der Reaktionsmittelabgabeanordnung der Reaktionsmittelabgabekörper 14b im Bereich des Übergangsbereichs 80b, also in einem Bereich, in welchem der Reaktionsmittelabgabekörper 14b in seinem ersten Längenbereich L₁ bezüglich der Körperlängsachse K seine kleinste radiale Abmessung aufweist, angrenzend an das Abgasführungselement 12 b positioniert bzw. daran getragen ist, kann in demjenigen Bereich des ersten Längenbereich L₁, in welchem der Reaktionsmittelabgabekörper 14b seine größte radiale Abmessung bezüglich der Körperlängsachse K aufweist, dieser an einem zusätzlichen Träger 82b getragen sein. Dieser kann durch einen das Abgasführungselement 12b umgebenden und beispielsweise daran auch festgelegten Rohrabschnitt bereitgestellt sein.

Es ist darauf hinzuweisen, dass der Reaktionsmittelabgabekörper 14b auch in anderen Abschnitten des ersten Längenbereich L₁ bzw. des zweiten Längenbereich L₂ an das Abgasführungselement 12b angrenzend positioniert bzw. daran getragen sein kann. So könnte beispielsweise der erste Längenbereich L₁ teilweise in den Abgasströmungskanal 13b eingreifend positioniert sein. Alternativ könnte der Reaktionsmittelabgabekörper 14b im Bereich des zweiten Längenbereichs L₂ am Abgasführungselement 12b getragen, also gasdicht festgelegt sein, so dass dieser zweite Längenbereich L₂ sich teilweise außerhalb des Abgasströmungskanals 13b erstreckt und selbstverständlich in diesem Bereich dann keine Durchgriffsöffnungen 44b aufweist.

Durch die vorliegende Erfindung wird eine Reaktionsmittelabgabeanordnung bereitgestellt, welche aufgrund der Möglichkeit, eine mit Reaktionsmittel zu benetzende Oberfläche erwärmen zu können, für eine zuverlässige Reaktionsmittelverdampfung sorgen kann, unabhängig von den Umgebungstemperaturen bzw. der Temperatur des den Reaktionsmittelabgabekörper umströmenden Abgases. Somit kann auch bei vergleichsweise niedrigen Temperaturen für eine zuverlässige Reaktionsmittelabdampfung und eine entsprechend zuverlässige Durchmischung des Reaktionsmittels mit Abgas gesorgt werden.

## Patentansprüche

1. Reaktionsmittelabgabeanordnung zur Abgabe von Reaktionsmittel in den Abgasstrom einer Brennkraftmaschine, umfassend:
- ein einen von Abgas (G) in einer Abgashauptströmungsrichtung (A) durchströmbaren Abgasströmungskanal (13; 13a; 13b) bereitstellendes Abgasführungselement (12; 12a; 12b),
- einen an dem Abgasführungselement (12; 12a; 12b) in den Abgasströmungskanal (13; 13a; 13b) sich längs einer Körperlängsachse (K) erstreckend getragenen Reaktionsmittelabgabekörper (14; 14a; 14b) mit einer Körperwandung (16; 16a; 16b), wobei in dem Reaktionsmittelabgabekörper (14; 14a; 14b) ein von einer Wandungsinnenfläche (32; 32a; 32b) der Körperwandung (16; 16a; 16b) umgebenes Reaktionsmittelaufnahmevolumen (20; 20a; 20b) vorgesehen ist, wobei das Reaktionsmittelaufnahmevolumen (20; 20a; 20b) sich in einer Verjüngungsrichtung (R) in Richtung der Körperlängsachse (K) wenigstens bereichsweise verjüngend ausgebildet ist und wobei der Reaktionsmittelabgabekörper (14; 14a; 14b) an einer Wandungsaußenfläche (18; 18a; 18b) der Körperwandung (16; 16a; 16b) von in dem Abgasströmungskanal (13; 13a; 13b) strömendem Abgas (G) umströmbar ist, wobei das Reaktionsmittelaufnahmevolumen (20; 20a; 20b) über wenigstens eine Durchtrittöffnung (44, 46; 62a, 64a; 44b, 46b) zu dem Abgasströmungskanal (13; 13a; 13b) offen ist,
- eine Reaktionsmittelabgabeeinheit (22; 22a; 22b) zur Abgabe von Reaktionsmittel (M) in das Reaktionsmittelaufnahmevolumen (20; 20a; 20b),
wobei der Körperwandung (16; 16a; 16b) eine Heizeinrichtung (38; 38a; 38b) zur Erwärmung des Reaktionsmittelabgabekörpers (14; 14a; 14b) wenigstens im Bereich der Wandungsinnenfläche (32; 32a; 32b) der Körperwandung (16; 16a; 16b) zugeordnet ist, wobei die Körperwandung (16; 16a; 16b) eine die Wandungsinnenfläche (32; 32a; 32b) wenigstens teilweise bereitstellende Innenwandung (30; 30a; 30b) und eine die Wandungsaußenfläche (18; 18a; 18b) wenigstens teilweise bereitstellende Außenwandung (26; 26a; 26b) umfasst, und wobei die Heizeinrichtung (38; 38a; 38b) zwischen der Innenwandung (30; 30a; 30b) und der Außenwandung (26; 26a; 26b) angeordnet ist,
**dadurch gekennzeichnet, dass** die Heizeinrichtung (38; 38a; 38b) wenigstens in einem Längenbereich (L₁; L) der Körperwandung (16; 16a; 16b) mit sich verjüngendem Reaktionsmittelaufnahmevolumen (20; 20a; 20b) angeordnet ist.

2. Reaktionsmittelabgabeanordnung nach Anspruch 1, **dadurch gekennzeichnet, dass** das Reaktionsmittelaufnahmevolumen (20; 20a; 20b) sich wenigstens bereichsweise im Wesentlichen konisch, hyperbelartig oder geschwungen verjüngt.

3. Reaktionsmittelabgabeanordnung nach Anspruch 2, **dadurch gekennzeichnet, dass** die Körperwandung (16; 16a; 16b) sich in der Verjüngungsrichtung (R) wenigstens bereichsweise verjüngend ausgebildet ist.

4. Reaktionsmittelabgabeanordnung nach Anspruch 2 oder 3, **dadurch gekennzeichnet, dass** die Körperwandung (16; 16b) in einem ersten Längenbereich (L₁) sich in der Verjüngungsrichtung (R) vorzugsweise im Wesentlichen konisch verjüngend ausgebildet ist und in einem an den ersten Längenbereich (L₁) anschließenden, vorzugsweise im Wesentlichen rohrartigen zweiten Längenbereich (L₂) wenigstens eine Durchtrittsöffnung (44; 44b) aufweist oder/und in Richtung der Körperlängsachse (K) offen ist.

5. Reaktionsmittelabgabeanordnung nach Anspruch 4, **dadurch gekennzeichnet, dass** die Körperwandung (16) mit ihrem ersten Längenbereich (L₁) und mit ihrem zweiten Längenbereich (L₂) im Abgasströmungskanal (13) angeordnet ist, vorzugsweise derart, dass der erste Längenbereich (L₁) im Bereich seiner größten Radialabmessung bezüglich der Körperlängsachse (K) an das Abgasführungselement (12) angrenzend positioniert ist.

6. Reaktionsmittelabgabeanordnung nach Anspruch 4, **dadurch gekennzeichnet, dass** die Körperwandung(16b) mit ihrem ersten Längenbereich (L₁) wenigstens teilweise, vorzugsweise im Wesentlichen vollständig außerhalb des Abgasströmungskanals (13b) angeordnet ist und mit ihrem zweiten Längenbereich (L₂) wenigstens teilweise im Abgasströmungskanal (13) angeordnet ist, vorzugsweise derart, dass der erste Längenbereich (L₁) im Bereich seiner kleinsten Radialabmessung bezüglich der Körperlängsachse (K) oder/und im Bereich eines Übergangsbereichs (80b) vom ersten Längenbereich (L1) zum zweiten Längenbereich (L2) an das Abgasführungselement (12) angrenzend positioniert ist.

7. Reaktionsmittelabgabeanordnung nach Anspruch 2 oder 3, **dadurch gekennzeichnet, dass** die Körperwandung (16a) in einem an das Abgasführungselement (12a) angrenzenden Längenbereich (L) sich in der Verjüngungsrichtung (R) vorzugsweise im Wesentlichen konisch verjüngend ausgebildet ist und in diesem Längenbereich (L) wenigstens eine Durchtrittsöffnung (62a, 64a) aufweist oder/und an einem von dem Abgasführungselement (12a) entfernten Ende (28a) dieses Längenbereichs (L) vorzugsweise in Richtung der Körperlängsachse (K) offen ist.

8. Reaktionsmittelabgabeanordnung nach einem der Ansprüche 2-7, **dadurch gekennzeichnet, dass** die Reaktionsmittelabgabeeinheit (22; 22a; 22b) zur Abgabe von Reaktionsmittel (G) in das Reaktionsmittelaufnahmevolumen (20; 20a; 20b) in einer zur Körperlängsachse (K) im Wesentlichen parallelen, im Wesentlichen der Verjüngungsrichtung (R) entsprechenden Reaktionsmittel-Hauptabgaberichtung (H) angeordnet ist.

9. Reaktionsmittelabgabeanordnung nach einem der vorangehenden Ansprüche, **dadurch gekennzeichnet, dass** das Reaktionsmittelaufnahmevolumen (20; 20a) im Bereich einer Öffnung (70; 46a) für den Austritt von Reaktionsmittel (M) offen ist, und dass im Reaktionsmittelaufnahmevolumen (20; 20a), vorzugsweise im Bereich der Öffnung (70; 46a), ein Reaktionsmittelfilter (72; 72a) vorgesehen ist.

10. Reaktionsmittelabgabeanordnung nach Anspruch 9, **dadurch gekennzeichnet, dass** der Reaktionsmittelfilter (72; 72a) poröses Material, vorzugsweise Metallschaummaterial, umfasst.

11. Reaktionsmittelabgabeanordnung nach einem der vorangehenden Ansprüche, **dadurch gekennzeichnet, dass** im Reaktionsmittelaufnahmevolumen (20; 20a) ein Reaktionsmittelablenkelement (74; 74a) vorgesehen ist, vorzugsweise wobei das Reaktionsmittelablenkelement (74; 74a) sich in Richtung von der Reaktionsmittelabgabeeinheit (22; 22a) weg vorzugsweise kegelartig erweiternd ausgebildet ist.

12. Reaktionsmittelabgabeanordnung nach einem der vorangehenden Ansprüche, **dadurch gekennzeichnet, dass** die Körperlängsachse (K) im Wesentlichen orthogonal zur Abgashauptströmungsrichtung (A) steht.

13. Reaktionsmittelabgabeanordnung nach einem der vorangehenden Ansprüche, **dadurch gekennzeichnet, dass** die Körperwandung (16; 16b) eine zwischen der Innenwandung (30; 30b) und der Außenwandlung (26; 26b) angeordnete Zwischenwandung (34; 34b) umfasst, und dass die Heizeinrichtung (38, 38b) zwischen der Innenwandung (30; 30b) und der Zwischenwandung (34; 34b) angeordnet ist oder/und zwischen der Zwischenwandung (34, 34b) und der Außenwandung (26; 26b) Isoliermaterial (42; 42b) angeordnet ist.,̅

14. Reaktionsmittelabgabeanordnung nach einem der vorangehenden Ansprüche, **dadurch gekennzeichnet, dass** die Heizeinrichtung (38; 38a; 38b) die Innenwandung (30; 30a; 30b) vorzugsweise wendelartig umgebend angeordnet ist.

15. Abgasanlage für eine Brennkraftmaschine, vorzugsweise in einem Fahrzeug, umfassend eine Reaktionsmittelabgabeanordnung (10; 10a; 10b) nach einem der vorangehenden Ansprüche.

## Claims

1. Reactant release arrangement for releasing reactant into the exhaust gas stream of an internal combustion engine, comprising:
- an exhaust gas guide element (12; 12a; 12b) providing an exhaust gas flow duct (13; 13a; 13b), through which exhaust gas (G) can flow in a main exhaust gas flow direction (A);
- a reactant release body (14; 14a, 14b) carried extending into the exhaust gas flow duct (13; 13a; 13b) along a longitudinal axis (K) of the body at the exhaust guide element (12; 12a; 12b) with a body wall (16; 16a; 16b), wherein a reactant-receiving volume (20; 20a; 20b) surrounded by a wall inner surface (32; 32a; 32b) of the body wall (16; 16a; 16b) is provided in the reactant release body (14; 14a; 14b), wherein the reactant-receiving volume (20; 20a; 20b) is configured tapering in a tapering direction (R) in the direction of the body longitudinal axis (K) in at least some areas and wherein exhaust gas (G) flowing in the exhaust gas flow duct (13; 13a; 13b) can flow around the reactant release body (14; 14a; 14b) at a wall outer surface (18; 18a; 18b) of the body wall (16; 16a; 16b), wherein the reactant-receiving volume (20; 20a; 20b) is open to the exhaust gas flow duct (13; 13a; 13b) via at least one passage opening (44;46; 62a, 64a; 44b, 46b),
- a reactant release unit (22; 22a; 22b) for releasing reactant (M) into the reactant-releasing volume (20; 20a; 20b),
wherein a heating device (38; 38a; 38b) for heating the reactant release body (14; 14a; 14b) is associated with the body wall (16; 16a; 16b) at least in the area of the wall inner surface (32; 32a; 32b) of the body wall (16; 16a; 16b), wherein the body wall (16; 16a; 16b) comprises an inner wall (30; 30a; 30b) at least partly providing the wall inner surface (32; 32a; 32b) and an outer wall (26; 26a; 26b) at least partly providing the wall outer surface (18; 18a; 18b), and wherein the heating device (38; 38a; 38b) is arranged between the inner wall (30; 30a; 30b) and the outer wall (26; 26a; 26b),
**characterized in that** the heating device (38; 38a; 38b) is arranged at least in a length area (L₁; L) of the body wall (16; 16a; 16b) with a tapering reactant-receiving volume (20; 20a; 20b).

2. Reactant release arrangement in accordance with claim 1, **characterized in that** the reactant-receiving volume (20; 20a; 20b) is configured tapering essentially conically, hyperbolically or in a curved manner in at least some areas.

3. Reactant release arrangement in accordance with claim 2, **characterized in that** the body wall (16; 16a; 16b) has a tapering configuration in the tapering direction (R) in at least some areas.

4. Reactant release arrangement in accordance with claim 2 or 3, **characterized in that** the body wall (16; 16b) has a preferably essentially conically tapering configuration in the tapering direction (R) in a first length area (L₁) and has at least one passage opening (44; 44b) or/and is open in the direction of the body longitudinal axis (K) in a preferably tubular second length area (L₂) adjoining the first length area (L₁).

5. Reactant release arrangement in accordance with claim 4, **characterized in that** the body wall (16) is arranged with its first area (L₁) and with its second length area (L₂) in the exhaust gas flow duct (13), preferably such that the first length area (L₁) is positioned adjoining the exhaust gas guide element (12) in the area of its greatest radial dimension in relation to the body longitudinal axis (K).

6. Reactant release arrangement in accordance with claim 4, **characterized in that** the body wall (16b) with its first length area (L₁) is arranged at least partly and preferably essentially completely outside the exhaust gas flow duct (13b) and is arranged with its second length area (L₂) at least partly in the exhaust gas flow duct (13), preferably such that the first length area (L₁) is positioned adjoining the exhaust gas guide element (12) in the area of its smallest radial dimension in relation to the body longitudinal axis (K) or/and in the area of a transition area (80b) from the first length area (L₁) to the second length area (L₂).

7. Reactant release arrangement in accordance with claim 2 or 3, **characterized in that** the body wall (16a) has a preferably essentially conically tapering configuration in a length area (L) adjoining the exhaust gas guide element (12a) and has in this length area (L) at least one passage opening (62a; 64a) or/and is open preferably in the direction of the body longitudinal axis (K) at an end (28a) located at a distance from the exhaust gas guide element (12a).

8. Reactant release arrangement in accordance with one of the claims 2-7, **characterized in that** the reactant release unit (22; 22a; 22b) for releasing reactant (G) into the reactant-receiving volume (20; 20a; 20b) is arranged in a main reactant release direction (H) that is essentially parallel to the body longitudinal axis (K) and essentially corresponds to the tapering direction (R).

9. Reactant release arrangement in accordance with one of the preceding claims, **characterized in that** the reactant-receiving volume (20; 20a) is open for the discharge of reactant (M) in the area of an opening (70; 46a) and that a reactant filter (72; 72a) is provided in the reactant-receiving volume (20; 20a), preferably in the area of the opening (70; 46a).

10. Reactant release arrangement in accordance with claim 9, **characterized in that** the reactant filter (72; 72a) comprises porous material, preferably metal foam material.

11. Reactant release arrangement in accordance with one of the preceding claims, **characterized in that** a reactant deflection element (74; 74a) is provided in the reactant-receiving volume (20; 20a), preferably wherein the reactant deflection element (74; 74a) is configured preferably conically expanding in the direction away from the reactant release unit (22; 22a).

12. Reactant release arrangement in accordance with one of the preceding claims, **characterized in that** the body longitudinal axis (K) is essentially at right angles to the main exhaust gas flow direction (A).

13. Reactant release arrangement in accordance with one of the preceding claims, **characterized in that** the body wall (16; 16b) comprises an intermediate wall (34; 34b) arranged between the inner wall (30; 30b) and the outer wall (26; 26b), and that the heating device (38, 38b) is arranged between the inner wall (30; 30b) and the intermediate wall (34, 34b) or/and insulating material (42; 42b) is arranged between the intermediate wall (34, 34b) and the outer wall (26; 26b).

14. Reactant release arrangement in accordance with one of the preceding claims, **characterized in that** the heating device (38; 38a; 38b) is arranged surrounding the inner wall (30; 30a; 30b) preferably in a helical pattern.

15. Exhaust system for an internal combustion engine, preferably in a vehicle, comprising a reactant release arrangement (10; 10a; 10b) in accordance with one of the preceding claims.

## Revendications

1. Dispositif de libération de réactif pour libérer un réactif dans le flux de gaz d'échappement d'un moteur à combustion interne, comprenant :
- un élément de guidage des gaz d'échappement (12 ; 12a ; 12b) fournissant un conduit d'écoulement des gaz d'échappement (13 ; 13a ; 13b), à travers lequel les gaz d'échappement (G) peuvent s'écouler dans une direction principale d'écoulement des gaz d'échappement (A) ;
- un corps de libération de réactif (14; 14a, 14b) supporté s'étendant dans le conduit d'écoulement des gaz d'échappement (13 ; 13a ; 13b) le long d'un axe longitudinal du corps (K) au niveau de l'élément de guidage des gaz d'échappement (12 ; 12a ; 12b) avec une paroi de corps (16 ; 16a ; 16b), dans lequel un volume de réception de réactif (20 ; 20a ; 20b) entouré par une surface intérieure de paroi (32 ; 32a ; 32b) de la paroi de corps (16 ; 16a ; 16b) est prévu dans le corps de libération de réactif (14 ; 14a ; 14b), dans lequel le volume de réception de réactif (20 ; 20a; 20b) est configuré de manière à se rétrécir dans une direction de rétrécissement (R) dans la direction de l'axe longitudinal (K) au moins dans quelques zones, et dans lequel les gaz d'échappement (G) s'écoulant dans le conduit d'écoulement des gaz d'échappement (13 ; 13a ; 13b) peuvent s'écouler autour du corps de libération du réactif (14 ; 14a ; 14b) sur une surface extérieure de paroi (18; 18a ; 18b) de la paroi de corps (16; 16a ; 16b), le volume de réception de réactif (20 ; 20a ; 20b) étant ouvert vers le conduit d'écoulement des gaz d'échappement (13 ; 13a ; 13b) par au moins une ouverture de passage (44; 46; 62a, 64a ; 44b, 46b),
- une unité de libération de réactif (22; 22a ; 22b) pour libérer le réactif (M) dans le volume de libération de réactif (20 ; 20a ; 20b),
dans lequel un dispositif de chauffage (38; 38a ; 38b) pour chauffer le corps de libération de réactif (14 ; 14a ; 14b) est associé à la paroi de corps (16 ; 16a ; 16b) au moins dans la zone de la surface intérieure (32; 32a ; 32b) de la paroi de corps (16 ; 16a; 16b), dans lequel la paroi de corps (16 ; 16a ; 16b) comprend une paroi intérieure (30; 30a ; 30b) fournissant au moins partiellement la surface intérieure de paroi (32; 32a ; 32b) et une paroi extérieure (26 ; 26a ; 26b) fournissant au moins partiellement la surface extérieure de paroi (18 ; 18a ; 18b), et dans lequel le dispositif de chauffage (38 ; 38a ; 38b) est disposé entre la paroi intérieure (30 ; 30a ; 30b) et la paroi extérieure (26 ; 26a ; 26b),
**caractérisé en ce que** le dispositif de chauffage (38 ; 38a ; 38b) est disposé au moins dans une zone de longueur (L₁; L) de la paroi de corps (16 ; 16a ; 16b) avec un volume de réception de réactif (20 ; 20a ; 20b) qui se rétrécit.

2. Dispositif de libération de réactif selon la revendication 1, **caractérisé en ce que** le volume de réception de réactif (20 ; 20a ; 20b) est configuré de manière à se rétrécir essentiellement de manière conique, hyperbolique ou courbé dans au moins certaines zones.

3. Dispositif de libération de réactif selon la revendication 2, **caractérisé en ce que** la paroi de corps (16 ; 16a ; 16b) a une configuration se rétrécissant dans la direction de rétrécissement (R) dans au moins certaines zones.

4. Dispositif de libération de réactif selon la revendication 2 ou 3, **caractérisé en ce que** la paroi de corps (16 ; 16b) présente dans une première zone de longueur (L₁) une configuration de préférence essentiellement conique dans la direction de la conicité (R) et présente au moins une ouverture de passage (44 ; 44b) ou/et est ouverte dans la direction de l'axe longitudinal du corps (K) dans une deuxième zone de longueur (L₂) de préférence tubulaire, adjacente à la première zone de longueur (L₁).

5. Dispositif de libération de réactif selon la revendication 4, **caractérisé en ce que** la paroi de corps (16) est disposée avec sa première zone de longueur (L₁) et avec sa deuxième zone de longueur (L₂) dans le conduit d'écoulement des gaz d'échappement (13), de préférence de telle sorte que la première zone de longueur (L₁) est positionnée à la suite de l'élément de guidage des gaz d'échappement (12) dans la zone de sa plus grande dimension radiale par rapport à l'axe longitudinal du corps (K).

6. Dispositif de libération de réactif selon la revendication 4, **caractérisé en ce que** la paroi de corps (16b) est disposée avec sa première zone de longueur (L₁) au moins partiellement et de préférence essentiellement complètement à l'extérieur du conduit d'écoulement des gaz d'échappement (13b) et est disposée avec sa deuxième zone de longueur (L₂) au moins partiellement dans le conduit d'écoulement des gaz d'échappement (13), de préférence de telle sorte que la première zone de longueur (L₁) soit placée à côté de l'élément de guidage des gaz d'échappement (12) dans la zone de sa plus petite dimension radiale par rapport à l'axe longitudinal du corps (K) et/ou dans la zone d'une zone de transition (80b) entre la première zone de longueur (L₁) et la deuxième zone de longueur (L₂).

7. Dispositif de libération de réactif selon la revendication 2 ou 3, **caractérisé en ce que** la paroi de corps (16a) présente, dans une zone de longueur (L) adjacente à l'élément de guidage des gaz d'échappement (12a), une configuration se rétrécissant de préférence essentiellement en cône et présente dans cette zone de longueur (L) au moins une ouverture de passage (62a ; 64a) et/ou est ouverte de préférence dans la direction de l'axe longitudinal du corps (K) à une extrémité (28a) située à distance de l'élément de guidage des gaz d'échappement (12a).

8. Dispositif de libération de réactif selon l'une des revendications 2-7, **caractérisé en ce que** l'unité de libération de réactif (22 ; 22a ; 22b) pour libérer le réactif (G) dans le volume de réception de réactif (20 ; 20a ; 20b) est disposée dans une direction principale de libération de réactif (H) qui est essentiellement parallèle à l'axe longitudinal du corps (K) et qui correspond essentiellement à la direction de rétrécissement (R).

9. Dispositif de libération de réactif selon l'une des revendications précédentes, **caractérisé en ce que** le volume de réception de réactif (20 ; 20a) est ouvert pour la décharge de réactif (M) dans la zone de l'ouverture (70 ; 46a) et qu'un filtre de réactif (72; 72a) est prévu dans le volume de réception de réactif (20 ; 20a), de préférence dans la zone de l'ouverture (70 ; 46a).

10. Dispositif de libération de réactif selon la revendication 9, **caractérisé en ce que** le filtre de réactif (72 ; 72a) comprend un matériau poreux, de préférence un matériau en mousse métallique.

11. Dispositif de libération de réactif selon l'une des revendications ci-dessus, **caractérisé en ce qu'**un élément de déviation de réactif (74; 74a) est prévu dans le volume de réception de réactif (20 ; 20a), de préférence l'élément de déviation de réactif (74; 74a) étant configuré de manière à s'élargir de préférence de manière conique dans la direction s'éloignant de l'unité de libération de réactif (22; 22a).

12. Dispositif de libération de réactif selon l'une des revendications ci-dessus, **caractérisé en ce que** l'axe longitudinal du corps (K) est essentiellement à angle droit par rapport à la direction principale d'écoulement des gaz d'échappement (A).

13. Dispositif de libération de réactif selon l'une des revendications précédentes, **caractérisé en ce que** la paroi de corps (16 ; 16b) comprend une paroi intermédiaire (34 ; 34b) disposée entre la paroi intérieure (30 ; 30b) et la paroi extérieure (26 ; 26b), et **en ce que** le dispositif de chauffage (38, 38b) est disposé entre la paroi intérieure (30 ; 30b) et la paroi intermédiaire (34, 34b) et/ou un matériau isolant (42 ; 42b) est disposé entre la paroi intermédiaire (34, 34b) et la paroi extérieure (26 ; 26b).

14. Dispositif de libération de réactif selon l'une des revendications précédentes, **caractérisé en ce que** le dispositif de chauffage (38 ; 38a ; 38b) est disposé autour de la paroi intérieure (30; 30a ; 30b) de préférence en forme d'hélice.

15. Système d'échappement pour un moteur à combustion interne, de préférence dans un véhicule, comprenant un dispositif de libération de réactif (10 ; 10a ; 10b) selon l'une des revendications précédentes.
